# Europäisches Patentamt
# European Patent Office
# Office européen des brevets

(11) Publication number: **0 058 304**
**B1**

(12) **EUROPEAN PATENT SPECIFICATION**

(45) Date of publication of patent specification: **15.05.85**

(51) Int. Cl.⁴: **C 02 F 1/44** // A61M1/16, A61M1/28, A61M1/34

(21) Application number: **82100333.2**

(22) Date of filing: **19.01.82**

(54) A water-purification unit with constant-flow valve.

(30) Priority: **13.02.81 PCt/se81/00039**

(43) Date of publication of application:
**25.08.82 Bulletin 82/34**

(45) Publication of the grant of the patent:
**15.05.85 Bulletin 85/20**

(84) Designated Contracting States:
**AT BE CH DE FR GB IT LI LU NL SE**

(56) References cited:
**DE-A-2 627 366
DE-A-2 919 315
FR-A-2 126 970
GB-A-1 504 334
GB-A-2 034 584
US-A-3 959 146**

The file contains technical information
submitted after the application was filed and
not included in this specification

(73) Proprietor: **Gambro Lundia AB
Box 10101
S-220 10 Lund (SE)**

(72) Inventor: **Jönsson, Ulf Lennart Percy
Ägovägen 7
S-240 20 Furulund (SE)**

(74) Representative: **Boberg, Nils Gunnar Erik
Gambro AB Patent Department Box 10101
S-220 10 Lund (SE)**

Courier Press, Leamington Spa, England.

## Description

### Technical field

The present invention relates to a water-purification unit comprising a module for reverse osmosis with an inlet for non-purified water, an outlet for purified water and an outlet for non-purified water, the outlet for non-purified water being connected to a drain via a constant-flow valve and a flushing valve being connected in parallel with the constant-flow valve, which is adapted so that on flushing of the module it lets through a substantially greater flow than the constant-flow valve.

Such a module comprises diaphragms of optional shape but of a composition designed to let through substantially only water molecules and molecules of the same order of magnitude. The diaphragms consist preferably of hollow fibres, but they may also take the form of plane films. If such a module contains pure water on the one side of a diaphragm and impure water on the opposite side, the so-called osmotic effect causes pure water to endeavour to force its way across to the impure side to produce dilution and to even out the concentration. The concept of reverse osmosis here means that the pressure on the impure side is increased, so that the osmosis effect is offset and the water instead passes over from the impure side to the pure side.

### Background art

A water-purification unit of the above-mentioned type has the disadvantage that it silts up easily, unless sufficiently large amounts of water constantly flush through the same.

It has been attempted earlier to achieve this by constantly allowing a portion of the non-purified water to be conducted from the module to a drain and another portion to be recycled from the outlet for the non-purified water to the inlet for the same. These two flows were separately controlled which in practice proved to be very difficult as well as making all servicing and repair work more complicated. An example of a system of the above kind can be found in for instance US—A— 3 774 763. A further drawback of a system of this kind is that if a flushing of the module is desired it has to be made by regulating any of the existing valves from the normal very low flow value to a high flow value necessary for the flushing.

US—A—3 959 146 show a more simple system for flushing a reverse osmosis module. The pressure within this module is depending, on one hand, on the flow controlled device at the outlet for the non-purified water and, on the other hand, on the pressure at the inlet of the module. Consequently, it is not possible to choose this pressure and this outlet flow independent of each other in an optimizing way.

### Disclosure of invention

The above-mentioned problem is solved in accordance with the invention in that the flow from the outlet for non-purified water is adapted, so that it is divided between on one hand the said constant-flow valve and/or flushing valve and on the other hand an adjustable valve for the control of the pressure in the module.

Thanks to the present invention the module can be effectively flushed even if it, in spite of the invention, should still silt up.

The flushing valve is especially used to achieve an effective flushing through the module after chemical sterilization of the same.

In principle a normal water-main pressure may be used as the input pressure in the unit according to the invention, but it is preferable to arrange a pressure pump connected between the water intake and the module which, like the rest of the unit, is adapted so that it can start only after a pressure pick-up arranged between it and the water intake has established that sufficient pressure exists in the water intake. In this way it is ensured that the module obtains a sufficient amount of water.

To ensure the function of the unit it is possible moreover to provide a return pipe starting from the outlet for purified water and which can be connected via a non-return valve either to a drain or to a point of the system upstreams of the inlet for non-purified water. In this way purified water, if it cannot be used for other purposes, can be returned to the inlet side of the module.

It is possible that the efficiency of the module deteriorates in time. To make sure that this is detected, it is appropriate to arrange a first conductivity meter upstreams of the inlet for non-purified water and a second conductivity meter downstreams of the outlet for purified water. By a comparison of the values read off these meters the purifying efficiency of the module can be evaluated. At the same time a reliable check on the outgoing purified water can be obtained by means of the second conductivity meter.

The efficiency of the unit can be improved by providing means for the heating of the incoming water. This may be done in such a manner that the driving motor of the pressure pump is adapted so that it cools the water input. In this way the efficiency of the module is increased by the heating of the incoming water obtained in this manner.

The invention can be used in many fields where the need for absolutely pure water exists, e.g. in connection with hemodialysis, peritoneal dialysis or hemofiltration. In all these processes water is used for the purification of blood and a more or less high degree of sterility is required. The arrangement in accordance with the invention is appropriately provided therefore with an intake for sterilizing agent arranged near the water inlet. This intake should be provided appropriately with means adapted to ensure that only sterilization programmes can be performed when this intake is connected to a source of sterilizing agent. In this manner a patient cannot be exposed to any risk of coming into contact with the sterilizing agent.

## Brief description of drawings

In the following the invention will be described in greater detail with reference to the enclosed drawings which show, by way of example, a preferred embodiment of the same.

Figure 1 shows a block diagram for the unit as a whole.

Figure 2 shows a constant-flow valve included in the unit.

## Best mode of carrying out the invention

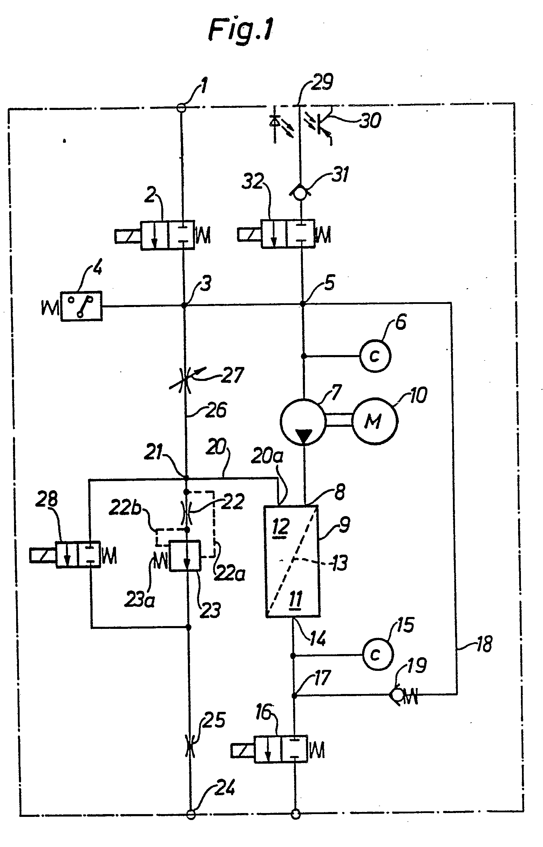

In the block diagram of a preferred embodiment of the subject of the invention shown in Figure 1 a water inlet is designated 1. From the water inlet the water flows through an inlet valve 2 shown schematically, which for example may be a conventional solenoid valve. At a point 3 the pressure of the water is measured by means of a pressure gauge 4. From the point 3 the water is conducted further via a branch point 5 a conductivity meter 6 and a pump 7 to the inlet 8 of a module 9 for reverse osmosis. In the course of this the water is preferably heated by being used at the same time for the cooling of the pump motor 10. The module 9 is divided into a pure water side 11 and an input side 12. These sides are separated by a diaphragm 13 indicated schematically. The purified water is conducted out via an outlet 14 and monitored with the help of a conductivity meter 15. The purified water is passed via a valve 16 to a place of consumption, e.g. an apparatus for hemodialysis. From a branch point 17 the excess water is conducted via a return pipe 18, which contains a non-return valve 19. Through this return pipe 18 the excess water can be returned to the point 5 upstream of the inlet 8 to the module 9. This is done when the unit is used, for example, in hemodialysis. For hemofiltration or peritoneal dialysis, which require a higher degree of sterility, the pipe 18 can be connected instead directly to a drain. This will exclude any risk of impure water being able to pass the module 9 under any circumstances, e.g. through a fault in the non-return valve 19.

From the side 12 of the module 9 non-purified water is conducted via an outlet 20a and the pipe 20 to a distributing point 21. By means of a constant-flow valve 22—23 connected to this point it is ensured that a small amount of liquid is conducted at all times from the module 9 through the pipe 20 and further to a drain 24.

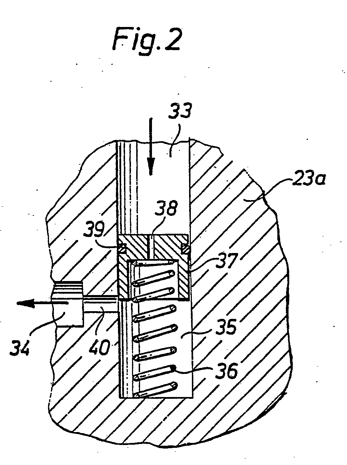

Numerals 22—23 thus designate a constant-flow valve, which may be of the design as shown in Figure 2. Lines 22a and 22b together with the spring 23a indicate that the valve is acted upon from one direction by the input pressure, whilst from the opposite direction it is acted upon partly by the secondary pressure and partly by a spring pressure. The liquid may also pass through a throttle 25. The part of the liquid in the pipe 20 which does not go through the constant-flow valve is conducted instead through a pipe 26 and an adjustable valve 27, e.g. a needle valve, pack to point 3 and further through point 5 to the inlet 8 of the module 9.

The module may nevertheless become silted up or obstructed in some other manner and therefore requires flushing through from time to time. For this purpose a special flushing valve 28 is arranged in parallel with the constant-flow valve 22—23. When the valve 28 is opened, larger amounts of liquid can be flushed through the input side 12 of the module 9.

To make it possible to sterilize the system, it is provided with an intake 29 for sterilizing agent. This intake is provided with an optical system 30, shown schematically, which is capable of detecting whether or not the intake is connected to a source of sterilizing agent. If such a source is connected, only special sterilization programmes can be carried out, which means that there is no risk then of any patient coming into contact with the sterilizing agent. This sterilizing agent is thus conducted from the intake 29 via a non-return valve 31 and a shutoff valve 32 to the point 5 which should be located as near as possible to the inlet valve 2.

The constant-flow valve 22—23 may be of any type. However, in practice the valve 23a shown in Figure 2 has proved to be suitable. This valve 23a is provided with an inlet side 33 and an outlet side 34. In between are a pressure chamber 35 and a spring 36. The pressure chamber is separated from the inlet side 33 by a piston 37 which has a throughhole 38 and is encircled by a sealing ring 39. The piston 37 is arranged so that it partially covers a duct 40 between the pressure chamber 35 and the outlet 34. When the pressure on the input side 33 is increased, the duct 40 is throttled, so that the pressure is automatically increased also in the pressure chamber 35. This in turn gives rise to a substantially constant flow through the ducts 38 and 40.

Theoretically, the constant-flow valve can be explained in the following manner, $F_1$ and $F_2$ representing the forces acting on the primary side and the secondary side of the piston, respectively, $A_{piston}$ representing the active piston area, $P_1$ and $P_2$ representing the pressures acting on the two sides of the piston, and $\Delta P$ the pressure difference between the two sides.

Force on the primary side of the piston:

$$F_1 = P_1 \times A_{piston};$$

Force on the secondary side of the piston:

$$F_2 = (P_1 - \Delta P) \times A_{piston} + F_{spring};$$

When the system is in equilibrium $F_1 = F_2$, that is to say

$$P_1 \times A_{piston} = (P_1 - \Delta P) \times A_{piston} + F_{spring};$$

or simplified:

$$\Delta P \times A_{piston} = F_{spring};$$

Since the piston area is constant, $\Delta P$ will be directly proportional to the $F_{spring}$. The spring force varies very little within the working range and we obtain therefore a ΔP which is practically constant. Owing to ΔP being essentially constant, and in combination with a fixed throttling, a constant flow is therefore obtained.

Whilst the valve described above has proved to be suitable, it will nevertheless be clear to those versed in the art that other types of conventional constant-flow valves may also be used.

With regard to the cooling of the motor-driven pump, reference is made to the patent application EP—A 0 058 304 submitted at the same time, entitled "A water-purification unit with liquid-cooled pump motor".

## Claims

1. A water-purification unit comprising a module (9) for reverse osmosis with an inlet (8) for non-purified water, an outlet (14) for purified water and an outlet (20a) for non-purified water, the outlet (20a) for non-purified water being connected to a drain (24) via a constant-flow valve (22—23) and a flushing valve (28) being connected in parallel with the constant-flow valve (22—23) which is adapted so that on flushing of the module (9) it lets through a substantially greater flow than the constant-flow valve (22—23), characterized in that the flow from the outlet (20a) for non-purified water is adapted, so that it is divided between on one hand the said constant-flow valve (22—23) and/or flushing valve 28 and on the other hand an adjustable valve (27) for the control of the pressure in the module (9).

2. A unit in accordance with claim 1, characterized by a pressure pump (7) connected between the water intake (1) and the module (9) which is adapted so that it can start only after a pressure pick-up (4) arranged between it and the water intake has established that sufficient pressure exists in the water intake.

3. A unit in accordance with any one of the preceding claims, characterized by a return pipe (18) arranged so as to start from the outlet (14) for purified water and which can be connected via a non-return valve (19) either to a drain (e.g. 24) or to a point (5) of the system upstreams of the inlet (8) for non-purified water.

4. A unit in accordance with any one of the preceding claims, characterized by a first conductivity meter (6) arranged upstream of the inlet (8) for non-purified water and a second conductivity meter (15) arranged downstream of the outlet (14) for purified water, whose values can be compared in order to evaluate the purification efficiency of the module (9).

5. A unit in accordance with any one of the preceding claims, characterized by means (10) for the heating of the incoming water.

6. A unit in accordance with claims 2 and 6, characterized in that the driving motor (10) of the pressure pump (7) is adapted so that it is cooled by the incoming water, as a result of which the efficiency of the module (9) is increased through the heating obtained in this manner.

7. A unit in accordance with any one of the preceding claims, characterized by an intake (29) for sterilizing agent arranged near the water inlet (1) and provided with means (30) adapted to ensure that only sterilization programmes can be performed when this intake (29) is connected to a source of sterilizing agent.

## Patentansprüche

1. Wasserreinigungseinheit mit einer Baugruppe (9) für umgekehrte Osmose mit einem Einlaß (8) für nichtgereinigtes Wasser, einem Auslaß (14) für gereinigtes Wasser und einem Auslaß (20a) für nichtgereinigtes Wasser, wobei der Auslaß (20a) für nichtgereinigtes Wasser mit einer Ableitung (24) über ein Ventil mit konstantem Durchfluß (22—23) verbunden ist und ein Spülventil (28) parallel zu dem Ventil mit konstantem Durchfluß (22—23) geschaltet ist und so ausgebildet ist, daß es beim Durchspülen der Baugruppe (9) einen wesentlich größeren Strom als das Ventil mit konstantem Durchfluß (22—23) durchläßt, dadurch gekennzeichnet, daß der Strom von dem Auslaß (20a) für nichtgereinigtes Wasser so eingerichtet ist, daß er zwischen dem Ventil mit konstantem Durchfluß (22—23) und/oder dem Spülventil (28) einerseits und einem einstellbaren Ventil (27) für die Steuerung des Druckes in der Baugruppe (9) aufgeteilt wird.

2. Einheit nach Anspruch 1, gekennzeichnet durch eine Druckpumpe (7), die mit dem Wassereinlaß (1) und der Baugruppe (9) verbunden ist und so ausgebildet ist, daß sie erst starten kann, nachdem eine Druckmeßeinrichtung (4), die zwischen ihr und dem Wassereinlaß angeordnet ist, festgestellt hat, daß ein ausreichender Druck in dem Wassereinlaß vorliegt.

3. Einheit nach einem der vorausgehenden Ansprüche, gekennzeichnet durch eine Rückführleitung (18), die so angeordnet ist, daß sie von dem Auslaß (14) für gereinigtes Wasser beginnt, und die über ein Rückschlagventil (19) entweder mit einer Ableitung (wie beispielsweise 24) oder mit einem Punkt (5) des Systems aufstromwärts von dem Einlaß (8) für nichtgereinigtes Wasser verbunden werden kann.

4. Einheit nach einem der vorausgehenden Ansprüche, gekennzeichnet durch ein erstes Leitfähigkeitsmeßgerät (6), das abstromwärts von dem Einlaß (8) für nichtgereinigtes Wasser angeordnet ist, und ein zweites Leitfähigkeitsmeßgerät (15), das abstromwärts von dem Auslaß (14) für gereinigtes Wasser angeordnet ist, deren Werte verglichen werden können, um die Reinigungseffizienz der Baugruppe (9) zu bewerten.

5. Einheit nach einem der vorausgehenden Ansprüche, gekennzeichnet durch Einrichtungen (10) für das Erhitzen des ankommenden Wassers.

6. Einheit nach den Ansprüchen 2 und 6, dadurch gekennzeichnet, daß der Antriebsmotor (10) der Druckpumpe (7) so ausgebildet ist, daß er durch das ankommende Wasser gekühlt wird, wodurch die Effizienz der Baugruppe (9) durch das auf diese Weise erhaltene Erhitzen erhöht wird.

7. Einheit nach einem der vorausgehenden Ansprüche, gekennzeichnet durch einen Einlaß (29) für Sterilisiermittel, der nahe dem Wassereinlaß (1) angeordnet ist und mit Einrichtungen (30) versehen ist, die gewährleisten, daß Sterilisationsprogramme nur dann ausgeführt werden können, wenn dieser Einlaß (29) mit einer Quelle für Sterilisiermittel verbunden ist.

## Revendications

1. Unité de purification d'eau comprenant un module (9) d'osmose inverse avec une entrée (8) pour l'eau non purifiée, une sortie (14) pour l'eau purifiée et une sortie (20a) pour l'eau non purifiée, la sortie (20a) pour l'eau non purifiée étant raccordée à une évacuation (24), à travers une vanne (22—23) à débit constant, et une vanne de balayage (28) étant raccordée en parallèle avec la vanne (22—23) à débit constant, la vanne de balayage étant prévue pour laisser passer, lors du balayage du module (9), un débit sensiblement plus grand que la vanne (22—23) à débit constant, caractérisée en ce que le débit provenant de la sortie (20a) pour l'eau non purifiée est réglé de manière à être divisé entre, d'une part, la vanne (22—23) à débit constant et/ou la vanne de balayage (28) et, d'autre part, une vanne réglable (27) pour le réglage de la pression dans le module (9).

2. Unité suivant la revendication 1, caractérisée en ce qu'elle comprend une pompe de surpression (7), raccordée entre l'arrivée d'eau (1) et le module (9), qui peut démarrer seulement lorsqu'un capteur de pression (4) placé entre la pompe et l'arrivée d'eau a vérifié qu'une pression suffisante existe dans l'arrivée d'eau.

3. Unité suivant l'une quelconque des revendications précédentes, caractérisée en ce qu'elle comprend une tuyauterie de retour (18), qui part de la sortie (14) pour l'eau purifiée et qui peut être raccordée, à travers un clapet anti-retour (19), à une évacuation (par exemple 24) ou à un point (5) du circuit à l'amont de l'entrée (8) pour l'eau non purifiée.

4. Unité suivant l'une quelconque des revendications précédentes, caractérisée en ce qu'elle comprend un premier conductivimètre (6), prévu à l'amont de l'entrée (8) pour l'eau non purifiée, et un deuxième conductivimètre (15), prévu à l'aval de la sortie (14) pour l'eau purifiée, dont les valeurs peuvent être comparées afin d'estimer le rendement de purification du module (9).

5. Unité suivant l'une quelconque des revendications précédentes, caractérisée en ce qu'elle comprend des moyens (10) pour le chauffage de l'eau entrante.

6. Unité suivant les revendications 2 et 6, caractérisée en ce que le moteur d'entraînement (10) de la pompe de surpression (7) est prévu pour être refroidi par l'eau entrante, ce qui a pour conséquence que le rendement du module (9) est augmenté par le chauffage obtenu de cette manière.

7. Unité suivant l'une quelconque des revendications précédentes, caractérisée en ce qu'elle comporte une entrée (29) d'agent désinfectant, prévue près de l'entrée d'eau (1) et comportant des moyens (30) qui assurent que seuls des programmes de désinfection peuvent être exécutés lorsque cette entrée (29) est raccordée à une source d'agent désinfectant.

# Fig.1

## Fig.2